# EUROPEAN PATENT SPECIFICATION

(11) **EP 4 619 299 B1**
(45) Date of publication and mention of the grant of the patent: **05.08.2026**
(21) Application number: 23813457.1
(22) Date of filing: 15.11.2023
(51) Int. Cl.: B63B 79/10, B60L 53/14, B60L 53/16, B60L 53/36, B60L 53/66, B63B 79/15, B63B 79/40, B63H 25/42, B63H 25/46, B63J 3/04, B60L 53/18

(54) **ASSISTED DYNAMIC POSITION CONTROL OF A CHARGING VESSEL**
UNTERSTÜTZTE DYNAMISCHE POSITIONSSTEUERUNG EINES LADESCHIFFS
COMMANDE DE POSITION DYNAMIQUE ASSISTÉE D'UN NAVIRE DE CHARGE

(30) Priority: 15.11.2022 GB 202217009
(43) Date of publication of application: 24.09.2025
(73) Proprietor: MJR CONTROLS LIMITED, Stockton on Tees, Durham TS17 9PP (GB)
(72) Inventor: CAIRNS, Paul Robert, Durham TS17 9PP (GB); DE GUNZBOURG, Dimitri David, Durham TS17 9PP (GB); ROMAN, Luis Miguel Guillan, Durham TS17 9PP (GB)
(74) Representative: HGF
(86) International application number: PCT/GB2023/053005
(87) International publication number: WO 2024/105403

(56) References cited:
- EP-A1- 2 980 942
- CN-A- 112 248 874
- KR-A- 20220 149 999
- US-A1- 2020 406 765

## Description

### Technical Field of Invention

This invention relates to the field of offshore charging of vessels (hybrid or fully electric) and specifically to offshore charging of vessels at an offshore location (e.g. a wind power generator or an offshore oil and gas installation) utilising a single umbilical cable for mooring to and charging directly from an offshore power generator. In particular, the present invention relates to dynamic positioning of a charging vessel moored via the umbilical cable. Even more particular, the present invention relates to dynamic position control of a charging vessel assisted by a tension compensation system of the umbilical cable so as to optimise the charging procedure by minimising the energy usage during charging.

### Background

Offshore Support Vessels (OSV), Service Operation Vessels (SOV) or Crew Transfer Vessels (CTV) are commonly used during the construction, maintenance and operation of offshore wind farms (or any other standard or renewable offshore power generators, e.g. wave power, tidal power, solar power, fuel generators etc.). These vessels are often used to transport technicians and other personnel and/or equipment and supplies to the sites on a daily basis or for larger vessels to remain in the offshore field for several weeks. In order to reduce the carbon footprint of such offshore maintenance activities, the demand for environmentally friendly transport, such as, for example hybrid and fully electric OSVs, SOVs or CTVs is growing so as to mitigate the negative impact of hydrocarbon fuel powered vessels. However, the currently limited energy density of battery storage severely reduces the operating capability and range of electric OSVs, SOVs and CTVs (eOSVs, eSOVs, eCTVs), thus, limiting the full adoption of such vessels. Consequently, offshore charging is becoming increasingly important to recharge such eOSVs, eSOVs and eCTVs.

For example, during charging operation from a wind turbine or wind farm energy storage, the CTV may be moored to the stationary power station via a dedicated mooring line to then use a separate umbilical cable to transfer electrical power from the offshore power station to the vessel. Vessel movement caused by the ever changing sea state (waves, wind, swell etc.) can make it difficult to control the vessel position with respect to the power station, i.e. control the relative distance and orientation between the vessel and the power station during charging when the umbilical cable and mooring line are connected to the power station. Separate elastic synthetic mooring lines are often used to avoid line failure as they absorb potentially damaging tension forces away from the separately connected charging cable (which has a high axial stiffness). However, the use of multiple separate lines can provide its own risk of entanglement. Also, potential snapback of the elastic mooring line(s) can pose a substantial risk to personnel in the event of line failure.

In addition, dynamic positioning may be used to maintain the charging vessel in a predetermined position relative to the offshore power station, thus, allowing the charging cable to be connected with the power station without a risky push-on manoeuvre. However, the dynamic positioning of a vessel requires significant amount of energy that is consumed by the vessels engine and thrusters to correct for any movement away from a predetermined position and alignment relative to the power station. The energy consumed is typically taken from the vessel's batteries, thus, the total charging time and energy required for recharging, as well as, costs of running the vessel are significantly increased. Furthermore, each battery has an optimal charging rate for maximising the battery's life span. However, excessive energy consumed for correcting the position of the vessel prevents or at least reduces the time a vessel battery can be charged at its optimal rate.

Document US2020/406765 describes, *inter alia,* a method for charging an electricity storage element of an energy storage system of a free-floating marine vessel. The method comprises the steps of (i) applying a power source from a marine platform to an electrical power bus of the floating vessel to charge the electricity storage element; (ii) transitioning a power generator of the marine vessel from an ON state to an OFF state so as to supply electrical power to the power bus; (iii) maintaining position and heading of the marine vessel by actuating electric thrusters of the marine vessel, wherein the electric thrusters are powered by the energy storage system; and (iv) in response to determining that the power source is unable to deliver sufficient power to charge the electricity storage element, transitioning the power generator from the OFF state to a charging state.

Furthermore, a safety system for the electrical connection of an electrical equipment item to an electrical power supply apparatus is disclosed in document EP2980942. Here. the power supply apparatus comprises first electrical conductors intended to be connected to a power source, such as an electrical network, a first electrical connection member, a first cut-off device and a first grounding device. The first connection member is connected to the first conductors, the first cut-off device is movable between a closed position for the circulation of a first current in the first conductors and an open position for the absence of circulation of the first current, and the first grounding device is movable between a closed position for the grounding of the first conductors and an open position for the absence of grounding.

Document KR20220149999A describes a mobile a charging system for charging a battery of the electric vessel. The mobile charging system allows a user to conveniently charge the battery of the electric vessel anywhere, regardless of its location. The mobile charging system comprises: transportation means; a battery charging unit; a charging cable; and an elastic multi-stage member.

Document CN112248874B discloses a shore power system based on an intelligent, non-inductive payment and power supply method. The system utilises an automatic reel cable take-up and pay-out device, the ship's power utilization information from plug-and-play recognition technology and the shore power. The system provides real-time communication using a cloud platform system.

Consequently, it is an object of the present invention to provide a system and method for optimising the charging procedure of a vessel utilising position control and an active cable management system including, for example, an adaptive catenary and tension control system.

### Summary of the Invention

An aspect of the present invention is set out in the independent claim(s).

According to a first aspect of the invention, there is provided a method for adaptive dynamic positioning of a vessel during offshore charging from a power station, actively assisted by a cable management system, the method comprising the steps of:
(i) establishing a control link between said cable management system, configured to control at least one characteristic parameter of a charging cable connected between the power station and the vessel, and a positioning control system, configured to control a propulsion system of the vessel so as to move the vessel relative to the power station;
(ii) defining, relative to the power station and based on said at least one characteristic parameter of said charging cable, a first target zone, adapted to effect vessel movement (response) of a first type, and at least one second target zone containing said first target zone, adapted to effect vessel movement of at least one second type;
(iii) monitoring any one of said at least one characteristic parameter of said charging cable, at least one performance parameter of said propulsion system, a vessel position and/or a vessel heading) relative to the power station, and at least one environmental parameter;
(iv) selectively modifying said first target zone and/or said at least one second target zone in response to a predetermined change of any one of said at least one characteristic parameter of said charging cable, at least one performance parameter of said propulsion system, said vessel position relative to the power station, and said at least one environmental parameter;
(v) controlling said positioning control system and said cable management system, so as to maintain the vessel within or move the vessel back towards said first target zone in accordance with said vessel movement of a first type and said vessel movement of a second type, respectively.

This provides the advantage of an optimised charging rate and time due to a reduction of energy consumption of the vessel's positioning control system (use of active propulsion system) during the charging procedure, as well as, an improved safety, an improved accessibility and availability by allowing for a wider weather window for charging vessels. In particular, assisting passive (e.g. from waves, current, wind etc.) and active vessel movement relative to the power station using the cable management system (with adaptive catenary and tension control of the charging cable) during the charging procedure provides for a significant reduction of energy consumption for position control, thus, improving not only the charging efficiency, but also optimising the whole charging procedure including safety and available charging "windows", which are subject to environmental factors (e.g. weather and sea state).

In addition, the present invention provides the further advantage of improving the longevity, performance and and of energy storage systems (e.g. batteries)

Advantageously, said vessel movement of a first type is a passive vessel movement assisted by said cable management system via said charging cable. Even more advantageously, said vessel movement of a second type is an active vessel movement actuated by said propulsion system and assisted by said cable management system via said charging cable. Preferably, said at least one characteristic parameter of said charging cable comprises any one of a cable length, a cable tension and a cable catenary.

Allowing for sole passive vessel movement that is assisted by the cable management system via the charging cable (i.e. following the natural vessel movement induced by waves, current wind etc.) while in the first zone, can reduce the total power consumption of the propulsion system during charging considerably, as it has to be far less reactive to any change of the vessel position. So the cable management system can assistingly compensate for a wider area of "free" movement of the vessel without the need for thruster actuation in order to move the vessel back to or maintain a vessel in a specific position and/or orientation relative to the power station. Furthermore, the constant feedback from the cable management system to the position control system, and vice versa, allows for optimally coordinated vessel movement relative to the power station with only an absolute minimum of, or even without any thruster input, during charging. The system is simply aligning the charging cable operably connecting the power station and the vessel, while at the same time controlling the cable length in order to maintain the cable tension and/or catenary within a predetermined range or below a maximum.

Advantageously, said at least one performance parameter of said propulsion system comprises any one of an energy power consumption rate, an energy charging rate, an energy storage capacity. Monitoring the performance parameter of the propulsion system (and batteries) allows for another degree of dynamic adaptability, because vessel movement zones may be modified to optimise the charging process even further, i.e. maximise the time the vessel remains in the predetermined zone effecting passive vessel movement.

Advantageously, said cable management system is adapted to provide dynamic feedback to said position control system and vice versa, so as to operably coordinate actions of said cable management system with actions of said position control system.

Advantageously, step (ii) is based on at least one environmental parameter in addition to said characteristic parameter of said charging cable, said at least one environmental parameter being measured in real-time and/or provided from historical data, and/or provided from a predictive model. Generating the target zones in accordance with real-time data or predictive model date of the environmental forces acting on the vessel during charging can maximise (optimise) the time a charging vessel remains in the first target zone (passive movement) while being assisted by the cable management system, thus, minimising the potential use of thrusters to move the vessel back to its predetermined position.

Advantageously, said vessel position and said vessel heading relative to said power station is provided by any one of a Global Navigation Satellite System (GNSS), an acoustic- or radar based position reference system and an optical- or laser based position reference system.

Preferably, step (v) further comprises controlling a cable guide and/or a cable connector provided at the power station and/or at the vessel so as to optimise cable alignment between the power station and the vessel, during charging. Even more preferably, said cable guide and/or said cable connector are actively actuatable. Additionally or alternatively, said cable guide and/or said cable connector are passively actuatable.

This provides the advantage of an increased first target zone (passive movement) allowing the vessel to move freely under the assistance of the cable management system over a wider range without the need of thrusters. Without controllable connector(s) and or cable guides that are adapted to follow the vessel movement, the connected charging cable would/could bend around the power station or at least the cable management system (reel) or vessel fix point, potentially reducing its length to the vessel, increasing the cable tension as well as change the catenary shape, thus, affecting the range of allowable vessel movement during charging.

Advantageously, step (ii) and/or step (iv) utilise artificial intelligence (AI) to define and/or selectively modify any one of said first target zone and at least one second target zone based on any one of said at least one characteristic parameter of said charging cable, said at least one performance parameter of said propulsion system, said vessel position relative to the power station, and said at least one environmental parameter.

Advantageously, the power station is any one of an offshore and onshore renewable energy station, configured to generate and/or transfer electric energy.

According to another aspect of the present invention, there is provided a system for actively assisted adaptive dynamic positioning of a vessel during offshore charging from a power station, comprising:
a cable management system, configured to control at least one characteristic parameter of a charging cable connected between the power station and the vessel;
a positioning control system, configured to control a propulsion system of the vessel;
a controller, configured to operably control said cable management system and said positioning control system for carrying out the method according to the first aspect of the present invention.

Advantageously, said cable management system comprises an adaptive catenary and tension control system configured to monitor and control said at least one characteristic parameter of said charging cable. Preferably, said characteristic parameter comprises any one of a cable length, a cable tension and a cable catenary. Even more preferably, said adaptive catenary and tension control system comprises a motor driven reeling drum.

Advantageously, the system further comprises at least one cable connector, adapted to operably connect to an end portion of said charging cable.

Advantageously, said at least one cable connector is adapted to actively and/or passively rotate in line with the orientation of said charging cable, during use.

Advantageously, said cable management system further comprises at least one cable guide adapted to provide for a predetermined rotational movement of said charging cable, during use. Preferably, said cable guide is actively and/or passively controllable.

### Brief Description of the Drawings

An exemplary embodiment of the invention is explained in more detail hereinbelow with reference to the figures:

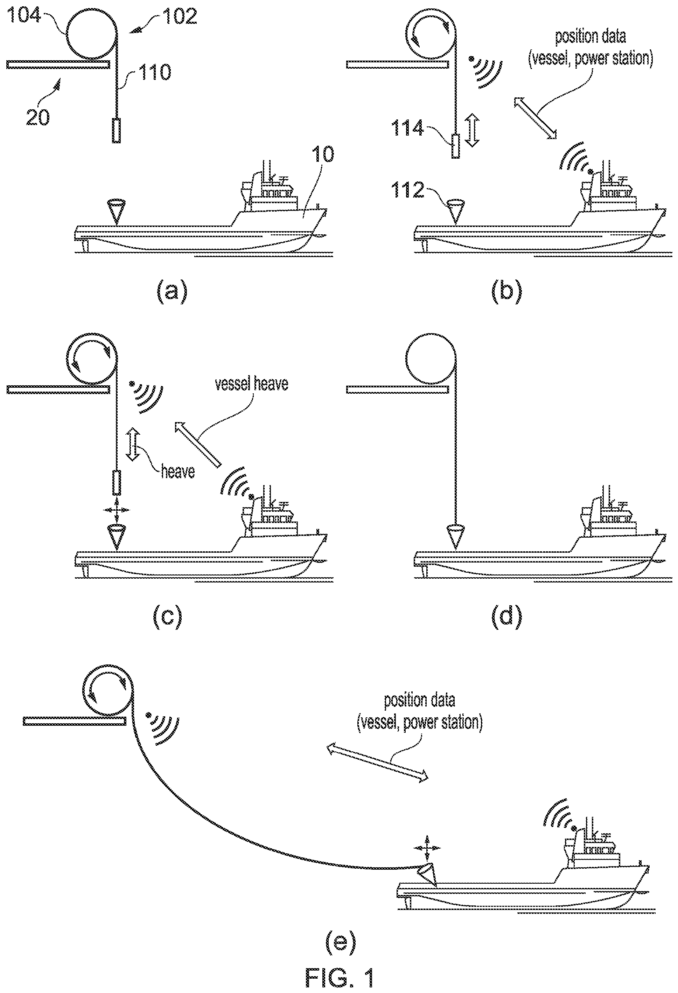

**Figure 1** illustrates a series of steps of a typical charging procedure between an approaching vessel and a power station (PS) comprising a cable management system, (a) approaching and positioning (standing off) the vessel relative to the PS for connection, (b) motion compensation between the vessel and the PS utilising a Motion Reference Unit (MRU) on the vessel while positioning the vessel (exchange of position data, e.g. GPS), (c) utilising the MRU to coordinate position and heave, as well as, cable control between the PS and the vessel during the coupling with a connector (unmanned), (d) coupling procedure completed, heave control is stopped, and (e) the vessel moves to a predetermined charging position with the cable management system (cooperating with moveable connector(s) and cable guide(s)) compensates for vessel movement/alignment;

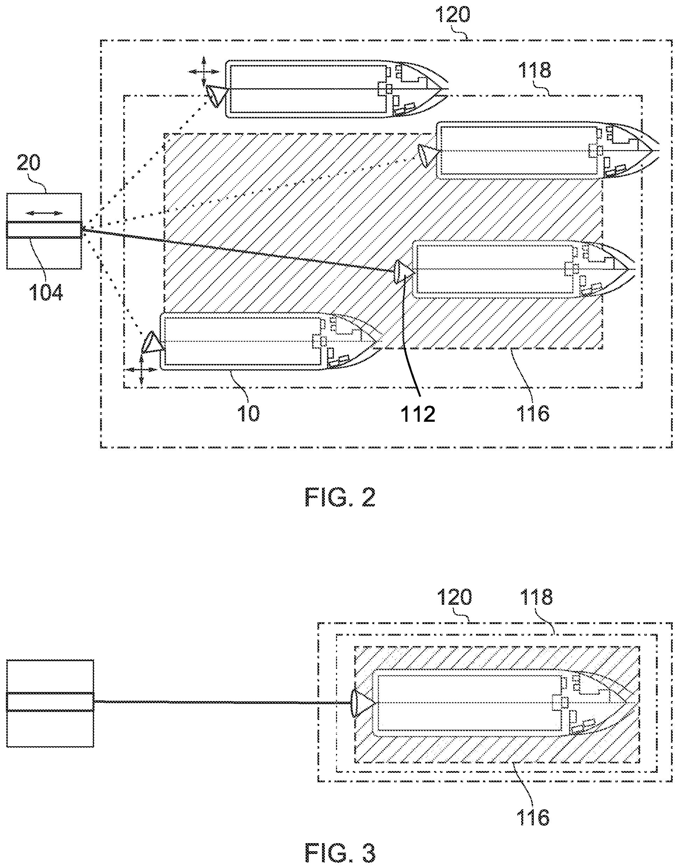

**Figure 3** illustrates predetermined target zones for the vessel position during charging, the zones may include a first target zone for passive vessel movement assisted for positioning control by the cable management system, a first and second target zone for active vessel movement (using thrusters) at various degrees;
**Figure 3** illustrates possible target zones or windows for vessel positions without assisted positioning control by a cable management system;
**Figure 4** illustrates steps of disconnecting the charging cable after completion of the charging procedure (a) moving the vessel back to the PS assisted by the cable management system using exchange of position data and (b) decoupling (unmanned) the charging cable from the vessel connector utilising heave compensation via the MRU assisted by the cable management system by exchanging relevant heave data;
**Figure 5** illustrates a series of steps of a typical charging procedure for an alternative setup between the vessel (gangway system) and the PS, (a) vessel approaches the PS and gangway/cable is moved to PS (with or without heave control by an MRU) assisted by a cable management system, (b) coupling charging cable to PS and (c) vessel is moving away from PS to a predetermined charging position assisted by the cable management system paying out the cable;
**Figure 6** illustrates a series of steps of a typical disconnection procedure for the alternative setup between the vessel (gangway system) and the PS, (a) vessel is moving back to the PS assisted by the cable management system, (b) the charging cable (connector) is decoupled from the PS connector, and (c) the vessel moves away from the PS;
**Figure 7** illustrates possible adaptive target zones for the vessel position during charging of the alternative gangway setup, the zones may include a first target zone for passive vessel movement assisted for positioning control by the cable management system, a first and second target zone for active vessel movement (using thrusters) at various degrees;
**Figure 8** illustrates possible target zones or windows for vessel positions (gangway setup) without assisted positioning control by a cable management system;
**Figure 9** illustrates a example flow diagram of vessel movement and controller interaction between the PS controller and the position control system, as well as, controlled vessel movement in the different zones (PS cable reel setup);
**Figure 10** illustrates a first example block diagram of the controller connection(s) between the PS controller, a software link to communicate with the vessel's own dynamic positioning system (i.e. the position control system) to control the propulsion system (thrusters);
**Figure 11** illustrates an alternative example block diagram of the controller connection(s) between the PS controller, an external position control system bypassing the vessel's own position control system and controlling the vessel's propulsion system (thrusters);
**Figure 12** illustrates another example block diagram of the controller connection(s) between the PS controller, an external position control system controlling the vessels propulsion system (thrusters), if the vessel does not have its own position control system (e.g. a dynamic positioning (DP) system;
**Figure 13** shows a schematic illustration of an example of a vessel's charging zone increased by the cable management system's adaptive catenary and tension control system (e.g. using an active cable reel, as well as, skidding and slewing mechanism);
**Figure 14** illustrates a block diagram of an example control method between the PS (having a motorised reel drum, an active skidding and slew mechanism for the reel) and the vessel's position control system , and
**Figure 15** illustrates each one of the control method blocks shown in Figure 14, (a) the reel drum control method, (b) the skid control method, (c) the slew control method and (d) the vessel position control system method operably linked with any one of the other control blocks.

### Detailed Description

Abbreviations used throughout the description include the following:

| | |
|---|---|
| **AHC** | Active Heave Compensation |
| **BMS** | Battery Management System |
| **CTV** | Crew Transfer Vessel |
| **eCTV** | Battery powered Crew Transfer Vessel |
| **MRU** | Motion Reference Unit |
| **OWF** | Offshore Windfarm |
| **OWT** | Offshore Wind Turbine |
| **OSS** | Offshore Substation |

The described example embodiment relates to a tension compensator system for an umbilical line / cable simultaneously used for mooring and charging.

Certain terminology is used in the following description for convenience only and is not limiting. The words 'right', 'left', 'lower', 'upper', 'front', 'rear', 'upward', 'down', 'downward', 'above' and 'below' designate directions in the drawings to which reference is made and are with respect to the described component when assembled and mounted (e.g. *in situ*)*.* The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, 'first', 'second', 'third' etc. merely indicate that different instances of like objects are being referred to and are not intended to imply that the objects so described must be in a given sequence, either temporally, spatially, in ranking or in any other manner.

Through the description and claims of this specification, the terms 'comprise' and 'contain', and variations thereof, are interpreted to mean 'including but not limited to', and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality, as well as, singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract or drawings), or to any novel one, or any novel combination, of the steps of any method or process so disclosed.

In the following description, the invention is described within the context of an offshore charging or power supply system, thus, providing a functional description of the Turbine/Substation Offshore Charging System. For this specific example, the system has been developed as an enabling technology to provide optimised offshore charging to all electric and hybrid electric vessels and other marine vessels, and is intended to be installed at an offshore windfarm, either on a wind turbine foundation or an offshore substation. However, it is understood by the person skilled in the art that the present invention is suitable for any offshore power station able to supply power (from traditional and/or renewable energy sources) to a charging vessel (e.g. eCTV) via a charging cable.

Referring now to Figures 1 to 4, a typical approach, connection and disconnection procedure of a charging vessel 10 to an offshore power station (PS) 20, e.g. Wind Farm, with a motor-power reel drum 104 and an adaptive catenary and tension control system 102 (cable management system) as described, for example, in patent application GB2216935.3 (hereby included by reference) is shown. Here, the main advantages of the "no-push on" connection are as follows:
- *Reduction of consumption. Push on is an extremely high-power consumption operation.*
- *Increase of safety. Push on is always a risky operation.*
- *Increase in availability. Charging can be carried out in a wider weather window*

During the approach, the vessel 10 will position itself in the most favorable orientation, based on wind and tidal forces, so as to reduce consumption and increase safety to the crew. Further, the vessel 10 (i.e. the position control system) and charger (i.e. controller at the power station (PS)) share each other's positions, e.g. via a wireless or a wired communication (control) link (e.g. using antennas or the cable to transmit and receive signals). In particular, when the vessel approaches, it move to a position suitable for the connector receptacle or catcher 112 to engage with the cable connector 114 on the charger cable 110 or umbilical. As shown in Figure 1(c), during connection, a Motion Reference Unit (MRU) may be used to measure vessel (i.e. the vessel connector receptor 112) movement and data is provided to the cable management system 102 at the PS 20, so as to initiate compensation movement of the umbilical cable (charging cable) 110 fed from the reeling drum 104. In addition, the data provided by the MRU is also utilized to compensate for vessel motion via the vessel connector receptor 112 which allows for active or passive movement in two degrees of freedom (DOF) to follow or even anticipate the relative movement of the vessel 10 and connector receptor 112 to then align the connector 114 and receptor 112 (or any cable guides) during coupling/connection. It is understood, that the present invention allows for unmanned or remotely operated (e.g. from the bridge) automatic connection between the umbilical connector 114 and the vessel connector/receptor 112, thus, significantly improving safety to the personnel (not required on deck), as well as, availability, because the connection procedure can be carried out in a much wider weather window (i.e. during more extreme weather conditions). Once mating of the cable connector 114 and vessel receptor 112 is complete, the MRU function is stopped and the vessel will be under assisted catenary and tension control from the cable management system 102 so as to manage (control) the relative position between the PS 20 and the vessel 10.

As shown in Figure 1(e), once connected the vessel 10 is moved to a predetermined charging position, typically at a safe distance from the PS 20 or any other mechanical structure (wind turbine or substation), thus drastically decreasing the risk of collision when, for example, in a vessel's dynamic positioning runout situation. During this, the vessel 10 (position control system) shares its position with the PS 20 (i.e. the cable management system 102) via wireless or power cable communication, the cable management system 102 keeps control of the catenary (coupled umbilical) using the active reel control (reel out/in) and vessel position control system (i.e. vessel propulsion), while the vessel receptor 112 (e.g. a gimballed bellmouth) moves in accordance with the vessel's change in position relative to the PS 20 or the charger.

Referring particularly to Figures 2 and 3, the vessel's position and the applied adaptive zoning (e.g. first target zone - dashed, second target zone - dash dot-dot, third target zone - dash dot), with each one of the different zones effecting different response actions of the vessel 10. For example, while the vessel is in a predetermined first target zone 116 (relative to the PS), the vessel 10 is allowed to drift (i.e. in idle) while assisted by the cable management system 102 via charging cable (reel in/out, reel drum skid and slew), as well as, the movable cable connector(s) 114 or receptor(s) 112 (active or passive), but without the help of the vessel propulsion system. When in the second 118 and third target zone 120, the cable management system 102 may request the vessel 10 (position control system) to activate its thrusters to move the vessel back into the first target zone 116. These zones are dynamically adaptable to the vessel's movement relative to the PS 20 depending on the effect of the catenary control (cable tension, skid and slew movement) to compensate for the vessel's change in position. Figure 3 illustrates the vessel's position and the applied zones (first-, second- and third target zone 116, 118, 120) without cable management system assistance, i.e. there is no link between the PS 20 and the vessel 10. Here the zones have to be much tighter in order to maintain a specific position of the vessel 10.

During the process of charging the vessel's batteries (i.e. energy storage), the vessel 10 may be on a so called 'low consumption positioning control'. In order to allow the vessel 20 to use as little power as possible, the vessel 10 (position control system) shares its position with the cable management system 102 of the PS 20 (requested or monitored). At the same time, the reeling drum 104 is orientated favorably to the vessel 10, for example, actively or passively via a skid and slew mechanism, or passively via a cable guide member (e.g. a bellmouth cable guide). Further, the cable management system 102 controls the catenary and tension of the charging cable 110 by paying out/in the power cable as required in order to maintain a predetermined tension or catenary profile, as well as, a vessel position. The main advantages of this assisted method are an increase of safety, as the vessel can keep engines running during position control, thus, reducing the risk of collision with other assets. Therefore, the PS 20 and/or other asset's mechanical integrity is guaranteed. There are no mooring loads present on the power cable 110 during charging. Further, the assisted position control of the vessel (within the target zones) reduces the charging time, since thrusters may only be used when the vessel moves out of the first target zone, utilising the adaptive catenary and tension control system of the cable management system 102 instead.

In particular, while charging, the vessel 10 only needs to maintain a "rough" position within a predetermined region or zone relative to the PS 20 (e.g. adjacent to the PS 20), as catenary (umbilical cable 110) is controlled in real-time via the active reeling drum 104 of the cable management system 102. The extension of the vessel's permitted position footprint (i.e. without using energy on the propulsion system) allows for a significant reduction in thrust consumption, because any position correction needs to be far less reactive and/or powerful. When the vessel 10 is assisted by the cable management system 102 during charging, cable management system (PS) and position control system (vessel) are exchanging position data, as well as, performance data of the propulsion system allowing the cable management system to actively assist and/or compensate for vessel movement during charging.

The assisted positioning control may include active alignment of the vessel receptor 112 (e.g. a gimballed bellmouth) in accordance with the vessel's position relative to the PS reeling drum 104. Further the cable management system may utilize other data, such as, for example, historical battery charging parameters for each vessel within a fleet that is provided on a common database, to optimize the charging process, i.e. charge respective batteries at an optimal rate and thus extend the battery's life span.

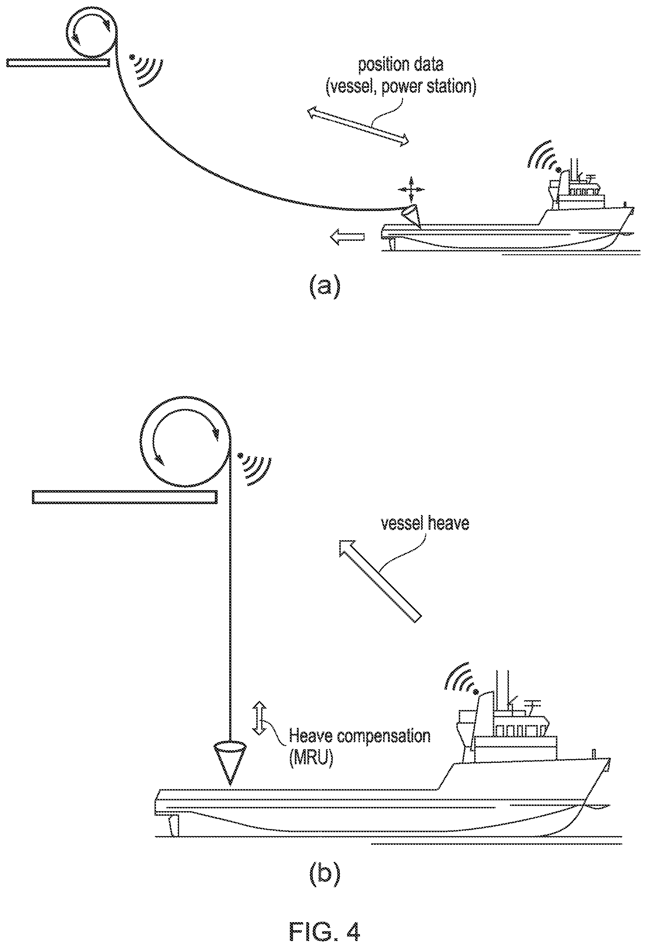

Figure 4 (a) and (b) shows the procedure when charging is complete. Here, the vessel 10 is simply moved back to the PS 20, with the positioning control system exchanging position data between the vessel 10 and the PS 20, e.g. wireless or via the umbilical cable, while the cable management system 102 maintains control of the catenary and cable tension (active reel, skid, slew), as well as, manages the vessel connector/receptor 114, 112 compensatory movement (e.g. in two DOF). The actual disconnection of the cable from the vessel receptor 112 (automatic, remotely controlled) utilizes motion compensation via MRU which is activated after decoupling to avoid clashing between the cable connector 114 and the vessel receptor 112.

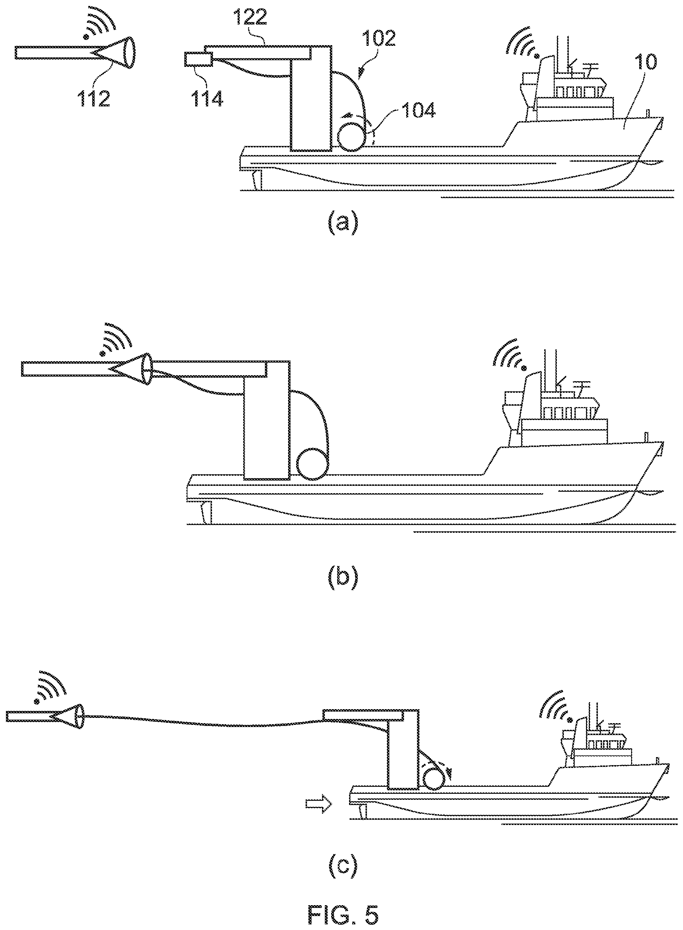

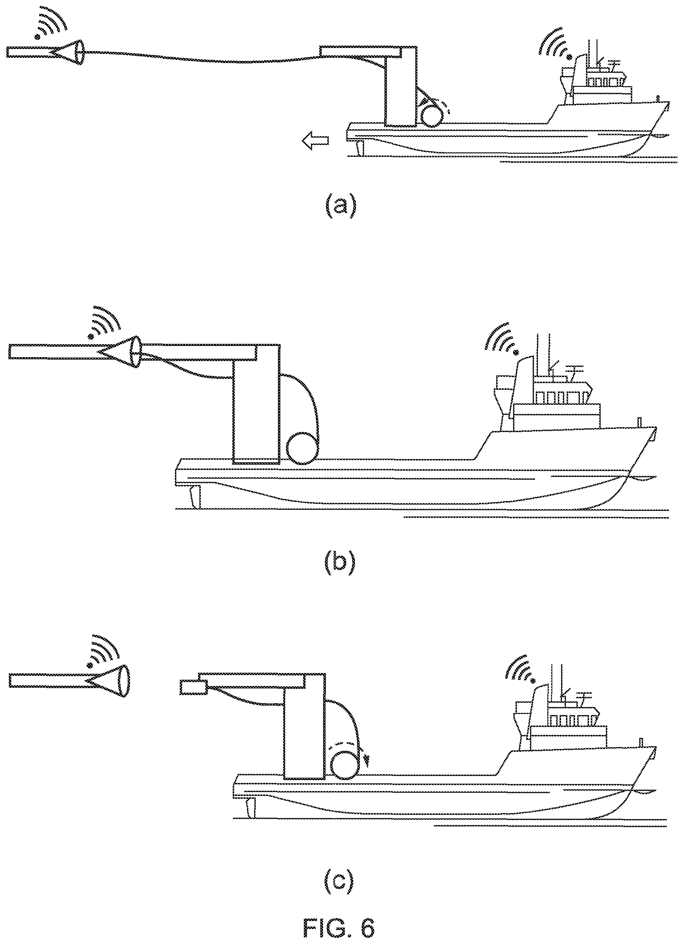

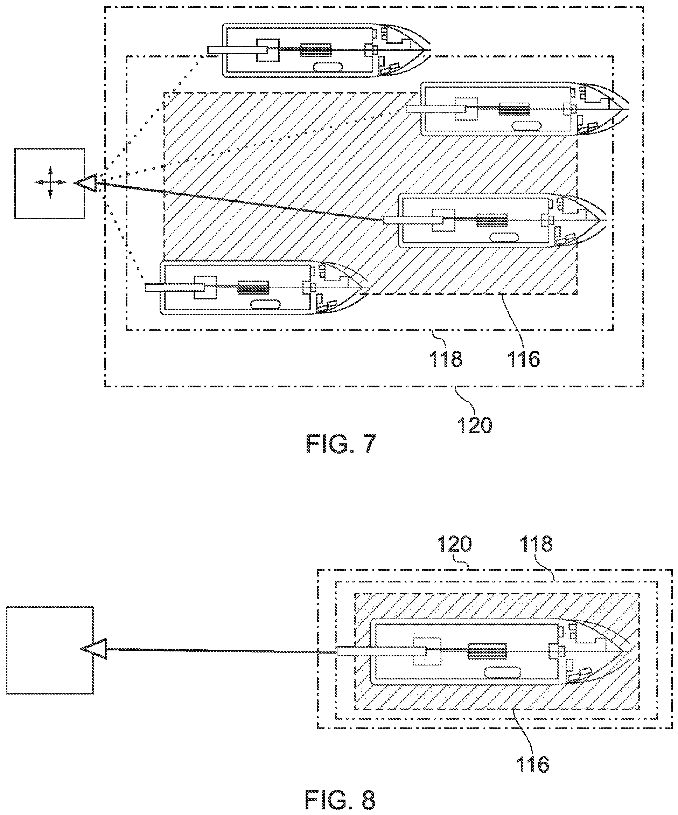

Referring now to Figures 5 to 8, an alternative connection procedure between the vessel 10 and the PS 20 is shown utilising a gangway 122. In this example, the gangway 122 is used to move the charging cable 110 into connection with a connector receptor 112 of the PS 20. A reeling drum 104 is provided on the vessel 10 to pay in/out the cable 110 as needed. A cable management system 102 controls the adaptive compensation via the active reeling drum 104 and the skid/slew mechanisms that might be provided with the cable management system 102 and/or the PS receptor 112. However, it is understood that the movable (rotatable, gimballed) connectors and receptors can be actuatable (e.g. via motor control) or passive followers. As in the procedure shown in Figure 1, the vessel approaches the PS 20, connects the charging cable to the PS 20 (via gangway operation) and moves back to a safe charging position (Fig. 5(a)-(c)). Once in position, the cable management system 102 (this time provided with the vessel 10, but it could also be provided with the PS 20) assists the vessel movement during charging in the same way as described in the previous example, i.e. utilising dynamic adaptive zoning (first-, second- and third zone 116, 118, 120) (Figures 7 and 8) to maintain a relative position and alignment of the vessel 10 to the PS 20 while minimizing energy consumption. For example, when the vessel 10 drifts into the second zone 118, thrusters may be used at a first power level. When the vessel drifts into the third target zone 120, thrusters may be used at a power level higher than in the second target zone 118, consuming more energy but providing a higher power output. Figure 6(a)-(c), 7 and 8 illustrate the decoupling procedure, as well as examples of the target zones 116, 118, 120 with or without assistance from the cable management system 102, which are equivalent to the previous example. It is understood that the position of the cable management system 102, connectors 112, receptors 114 is interchangeable between the vessel 10 and the PS 20.

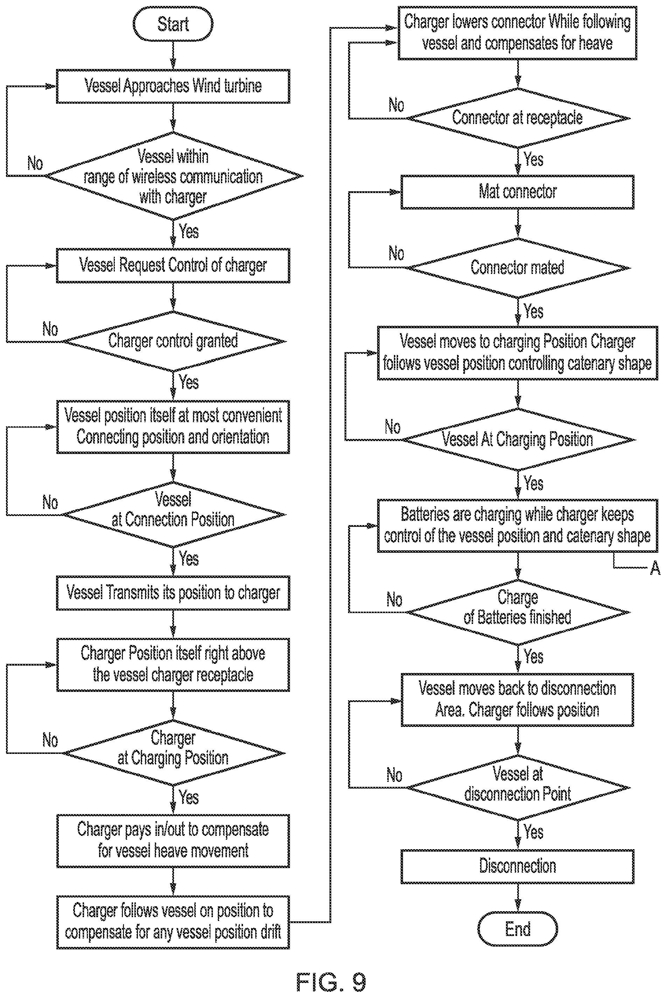

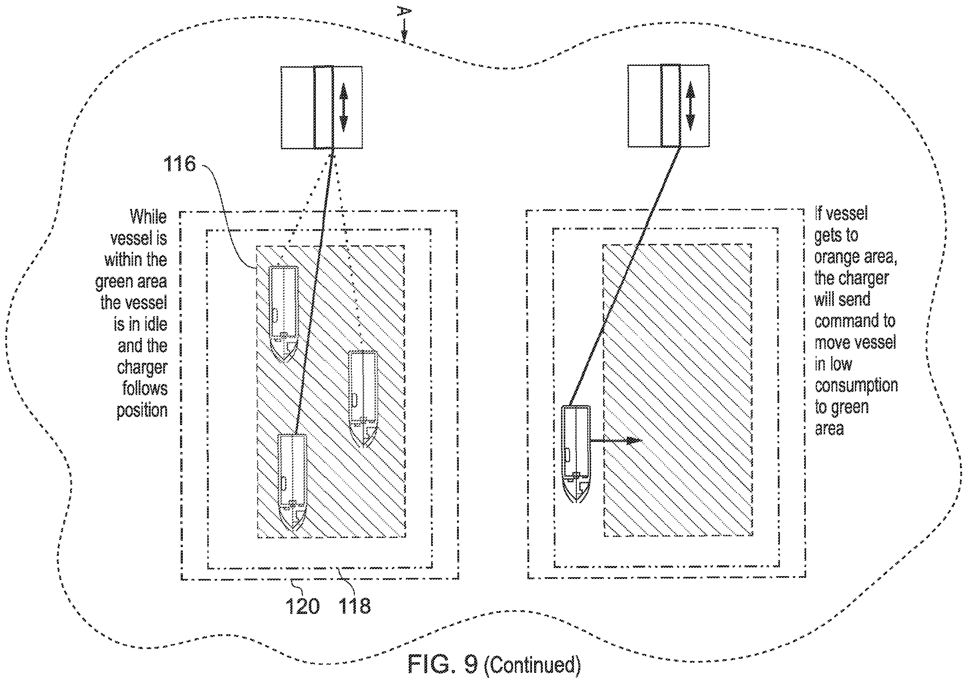

Figure 9 shows a simplified flow chart of an example method of the present invention going through the procedure of an approaching vessel where its position control (e.g. dynamic positioning control DP) is put under the control of the cable management system 102 provided with the PS 20 managing the connection, charging and disconnection procedure. The flow chart may be applied to any embodiment/positioning of the cable management system 102, connectors 114, receptors 114 between the PS 20 and the vessel 10 without diverting from the scope of the present invention. When using a gangway setup, respective decision boxes are simply replaced by the appropriate ones (e.g. "position suitable for grabbing by gangway 122 or crane").

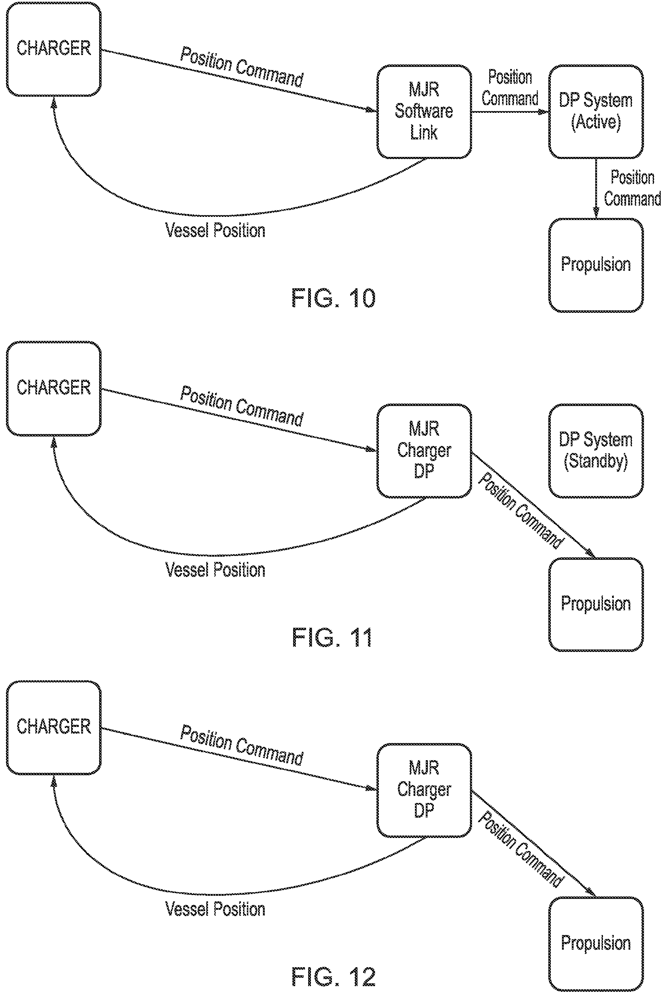

Figures 10 to 12 shows simplified block diagrams of different control scenarios between the PS 20 and the vessel 10 (i.e. between the cable management system 102 and the position control system). It is understood that the position control system comprises a typical DP system capable of controlling the vessel's propulsion system in order to maintain a predetermined position, utilising sensors and data feeds such as GPS, optical position sensors, acoustic position sensors or any other suitable positioning reference system, as well as, environmental parameters (e.g. wave motion, wind, current, tides etc.), MET-ocean parameters and/or Artificial Intelligence (AI) systems in order to provide predictive models of vessel motion within a predetermined timeframe. The input of any one of the data may be used to dynamically adapt any one of the target zones 116, 118, 120 in terms of its size, shape or relative position to the PS 20, or by adding or removing target zones, so as to optimize the effectiveness of charging the vessel 10 and/or improve safety to the vessel, PS and crew during charging. The actual mechanism of dynamic positioning (DP) for vessels is well known in the art and will therefore not be described in any further detail.

In the control setup shown in Figure 10, the approaching vessel 10 has its own dynamic positioning system (DP), so a software module may be installed on the vessel (position control system) to allow a communication/control link between the cable management system 102 and the vessel 10. Here, the vessel 10 will use its own DP to position the vessel 10 under the assistance of the cable management system 102. Figure 11 shows a scenario where a dedicated DP system is provided to circumvent the vessel's own DP (put on stand-by) and control the vessel position assisted by the cable management system 102 during charging. Figure 12 shows a scenario where the vessel 10 does not have its own DP and a dedicated DP system (e.g. a controller module) is provided to interface with the vessel's position control system (propulsion system) and energy usage monitoring system, so as to control the vessel's position assisted by the cable management system 102 during charging.

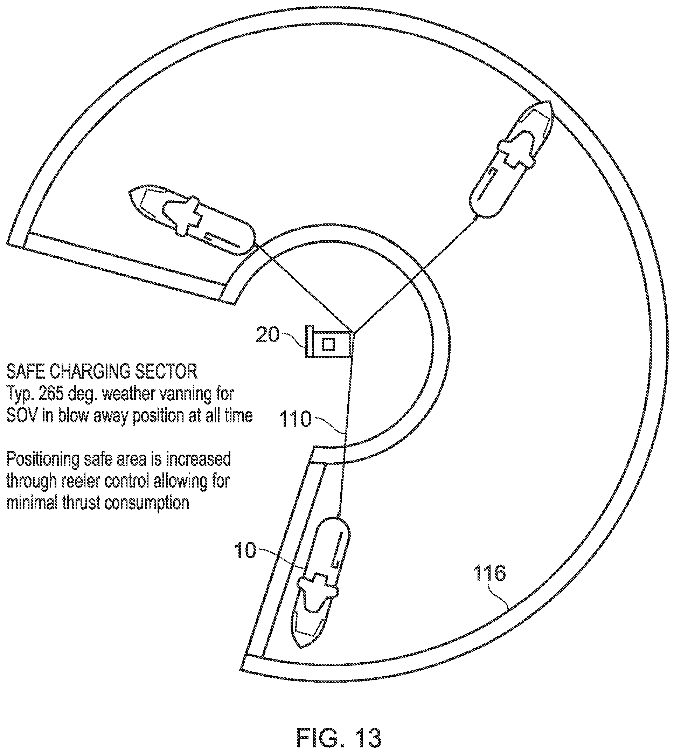

Figure 13 illustrates an example of possible vessel movement relative to a PS 20 (e.g. wind turbine) within a first target zone 116 determined by the cable management system 102 (i.e. active reeling drum, skid and slew mechanisms, as described in GB2216935.3). In this target zone 116, the cable management system 102 uses catenary control without active thruster control so as to minimise vessel thrust/propulsion consumption during charging. The movement of the charging cable about the PS 20 may be enabled by a passive or active bellmouth cable guide (with connector, provided at the PS) and/or a actively or passively moveable receptor (provided at the vessel). The vessel's orientation (heading) or position information (relative to the PS 20) may be used to control the actively moveable cable guide, connectors and/or receptors.

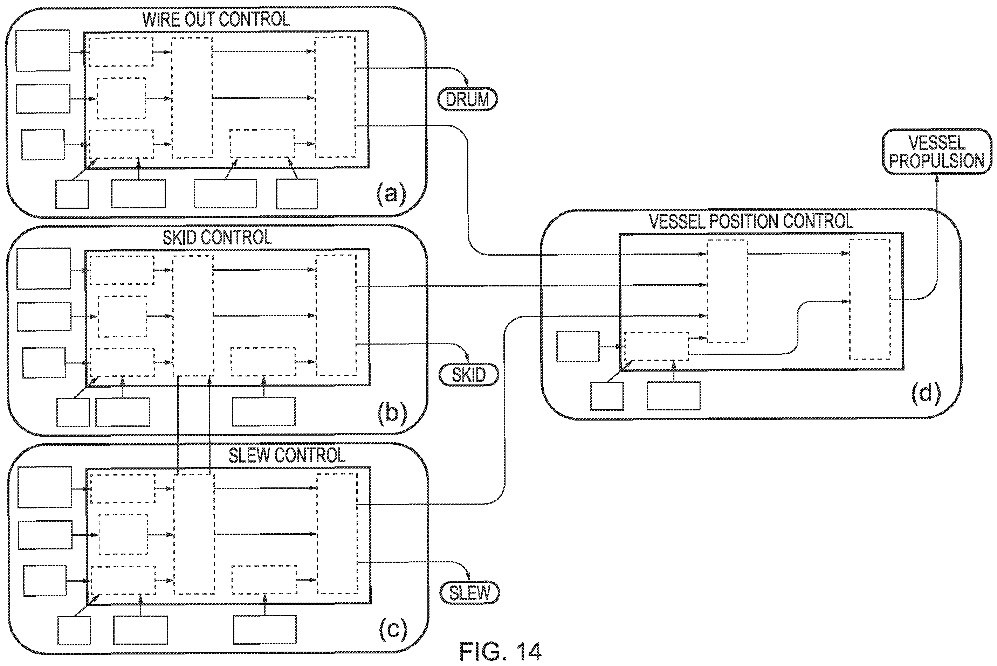

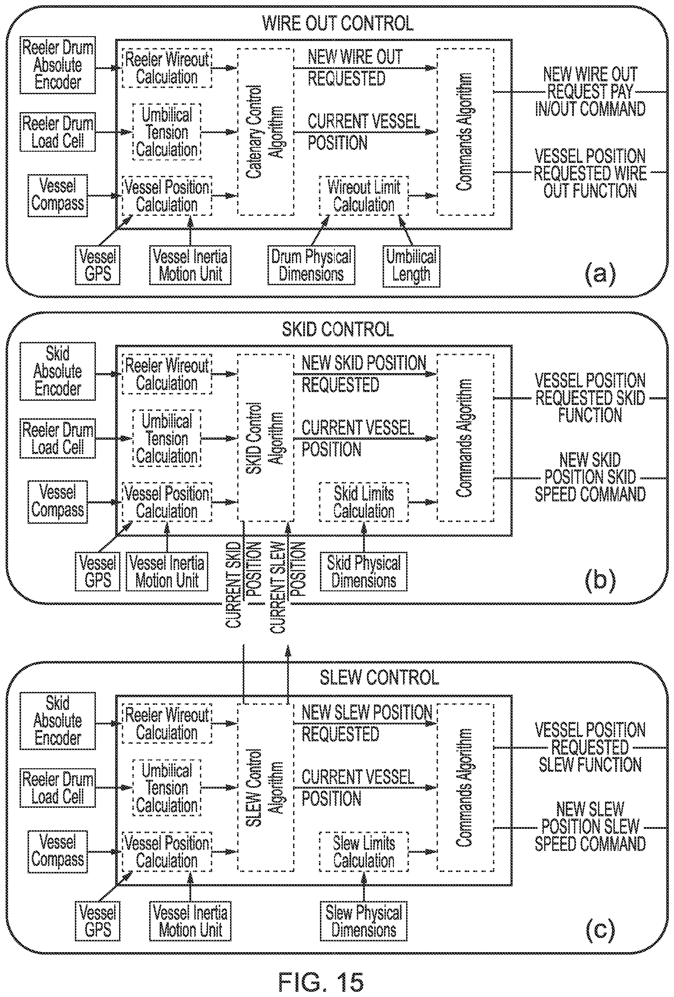

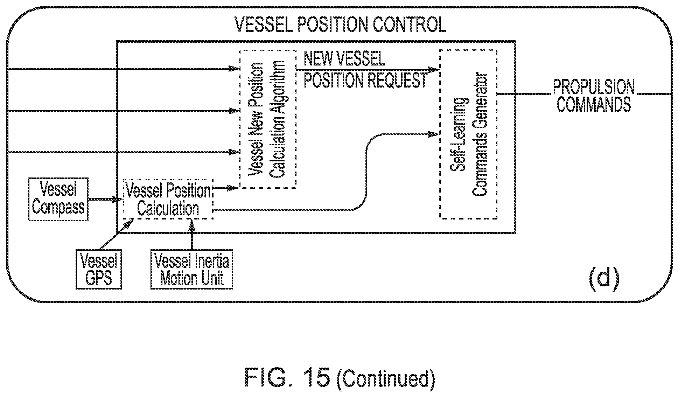

Figure 14 illustrates an example control chart between the possible compensator systems of the cable management system 102 (active reel or drum, skid and slew) and the vessel's position control system when assisted by the cable management system 102 during charging. Details of each control chart are shown in Figure 15 (a) to (d). It is understood by the person skilled in the art, that the control chart may only include Drum control with or without any one of the skid and slew control without diverting from the scope of the present invention.

In summary, the present invention provides for a catenary (i.e. cable management system 102 with at least one active reeling drum 104) assisted dynamic position control, that is adapted to maintain the position of a vessel 10 within a predetermined (but dynamically adaptable) target zone relative to a charger station (i.e. power station, PS 20) at minimum energy consumption of the vessels propulsion system. Here, the controller (PS or vessel) monitors in real-time the vessels position (e.g. GPS, or any other positioning reference system), as well as, the cable tension and/or catenary profile and/or length, plus other suitable parameters, such as a vessel battery charge history and charging parameters, and/or environmental parameters (real time or historically), such as, wind, wave, current, (predicted) energy consumption of propulsion system, in order to optimise the cooperating systems, i.e. the cable management system 102 (reel position and drive, connector position etc.) and the vessel (dynamic position control, DP, using thrusters to maintain a predetermined target zone(s)) in such a way, that energy consumption for thrusters is minimised, while allowing the vessel 10 to move within a predetermined target zone relative to the PS 20 or a charger station, and while keeping the stress/tension of the catenary (umbilical charging cable) within a predetermined catenary profile and/or range of cable tension (e.g. below a maximum tension threshold).

Environmental parameters, e.g. wind, current and waves may be utilised via the vessel's DP system itself (if the vessel is provided with a DP system) and the propulsion system is managed/controlled by the DP system (position control system), wherein the cable management system 102 (reeling drum, skid and slew mechanism) is used to calculate (in real time) a 'maximised excursion zone boundary' that in conjunction with the DP, allows significant dampening of the vessel's propulsion reactivity, thus, significantly reducing consumed power/energy and maximising the power/energy available to recharge the vessel's battery pack.

So, the cable management system 102 controls the reel to actively pay-out and reel-in its charging cable 110 connected with the vessel, rotate the reel 104 (i.e. slew) or move about on a rail (i.e. skid) to control catenary profile and cable tension level, as well as, communicate (control) in real time with the position control system (e.g. DP) (from the vessel or external) to selectively activate the thrusters with bare minimal reactivity and thus minimise consumption while charging. A predicted model of the vessel movement and use of thrusters may be generated using the cable management system 102 input parameters (i.e. allowed zone of movement relative to the PS 20 based on the Degree of Freedom of the adaptive catenary and tension control system, and related connectors and receptors 114, 112).

During hand-over of an approaching vessel 10, the cable management system 102 "connects" with the vessel position control system (or vice versa) and manages the connection procedure of the PS 20 to the vessel 10. Here, the vessel's connector (bellmouth) real-time position, heave and acceleration parameters are sent to the cable management system 102. The cable management system 102 uses those parameters to synchronise cable connectors to vessel receptor motion (active heave compensation via MRU) significantly increasing connection weather windows and reducing connection time (saving power consumption). Parameters that may be monitored for the method of the present invention includes: vessel position; vessel heading; charging cable catenary length; charging cable tension; Metocean parameters; battery state of charge; propulsion consumption and health status.

**It** will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible, for example, variations may exist in shape, size, arrangement (i.e. a single unitary components or two separate components), assembly or the like.

## Claims

1. A method for adaptive dynamic positioning of a vessel (10) during offshore charging from a power station (20), actively assisted by a cable management system (102), the method comprising the steps of:
(i) establishing a control link between said cable management system, configured to control at least one characteristic parameter of a charging cable (110) connected between the power station and the vessel, and a positioning control system, configured to control a propulsion system of the vessel so as to move the vessel relative to the power station;
(ii) defining, relative to the power station and based on said at least one characteristic parameter of said charging cable, a first target zone (116), adapted to effect vessel movement (response) of a first type, and at least one second target zone (118) containing said first target zone, adapted to effect vessel movement of at least one second type;
(iii) monitoring any one of said at least one characteristic parameter of said charging cable, at least one performance parameter of said propulsion system, a vessel position and/or a vessel heading relative to the power station, and at least one environmental parameter;
(iv) selectively modifying said first target zone and/or said at least one second target zone in response to a predetermined change of any one of said at least one characteristic parameter of said charging cable, at least one performance parameter of said propulsion system, said vessel position relative to the power station, and said at least one environmental parameter;
(v) controlling said positioning control system and said cable management system, so as to maintain the vessel within or move the vessel back towards said first target zone in accordance with said vessel movement of a first type and said vessel movement of a second type, respectively.

2. A method according to claim 1, wherein said vessel movement of a first type is a passive vessel movement assisted by said cable management system via said charging cable, and, wherein said vessel movement of a second type is an active vessel movement actuated by said propulsion system and assisted by said cable management system via said charging cable.

3. A method according to any one of the preceding claims, wherein said at least one characteristic parameter of said charging cable comprises any one of a cable length, a cable tension and a cable catenary, and, wherein said at least one performance parameter of said propulsion system comprises any one of an energy power consumption rate, an energy charging rate, an energy storage capacity.

4. A method according to any one of the preceding claims, wherein said cable management system is adapted to provide dynamic feedback to said position control system and vice versa, so as to operably coordinate actions of said cable management system with actions of said position control system.

5. A method according to any one of the preceding claims, wherein step (ii) is based on at least one environmental parameter in addition to said characteristic parameter of said charging cable, said at least one environmental parameter being measured in real-time and/or provided from historical data, and/or provided from a predictive model.

6. A method according to any one of the preceding claims, wherein said vessel position and said vessel heading relative to said power station is provided by any one of a Global Navigation Satellite System (GNSS), an acoustic- or radar based position reference system and an optical- or laser based position reference system.

7. A method according to any one of the preceding claims, wherein step (v) further comprises controlling a cable guide (112) and/or a cable connector (114) provided at the power station and/or at the vessel so as to optimise cable alignment between the power station and the vessel, during charging.

8. A method according to claim 7, wherein said cable guide and/or said cable connector are actively actuatable.

9. A method according to claim 8, wherein said cable guide and/or said cable connector are passively actuatable.

10. A method according to any one of the preceding claims, wherein step (ii) and/or step (iv) utilise artificial intelligence (AI) to define and/or selectively modify any one of said first target zone and at least one second target zone based on any one of said at least one characteristic parameter of said charging cable, said at least one performance parameter of said propulsion system, said vessel position relative to the power station, and said at least one environmental parameter.

11. A method according to any one of the preceding claims, wherein the power station is any one of an offshore and onshore renewable energy station, configured to generate and/or transfer electric energy.

12. A system for actively assisted adaptive dynamic positioning of a vessel during offshore charging from a power station, comprising:
a cable management system (102), configured to control at least one characteristic parameter of a charging cable (110) connected between the power station (20) and the vessel (10);
a positioning control system, configured to control a propulsion system of the vessel;
a controller, configured to operably control said cable management system and said positioning control system for carrying out the method according to any one of claims 1 to 11.

13. A system according to claim 12, wherein said cable management system comprises an adaptive catenary and tension control system configured to monitor and control said at least one characteristic parameter of said charging cable, and, wherein said characteristic parameter comprises any one of a cable length, a cable tension and a cable catenary, and, wherein said adaptive catenary and tension control system comprises a motor driven reeling drum (104).

14. A system according to any one of claims 12 to 13, further comprising at least one cable connector (114), adapted to operably connect to an end portion of said charging cable, and, wherein said at least one cable connector is adapted to actively and/or passively rotate in line with the orientation of said charging cable, during use.

15. A system according to any one of claims 12 to 14, wherein said cable management system further comprises at least one cable guide (112) adapted to provide for a predetermined rotational movement of said charging cable, during use, and, wherein said cable guide is actively and/or passively controllable.

## Patentansprüche

1. Verfahren zur adaptiven dynamischen Positionierung eines Schiffs (10) während des Offshore-Ladens von einer Leistungsstation (20), aktiv unterstützt durch ein Kabelmanagementsystem (102), wobei das Verfahren die folgenden Schritte umfasst:
(i) Herstellen einer Steuerverknüpfung zwischen dem Kabelmanagementsystem, das dazu konfiguriert ist, zumindest einen charakteristischen Parameter eines Ladekabels (110) zu steuern, das zwischen der Leistungsstation und dem Schiff verbunden ist, und einem Positionierungssteuersystem, das dazu konfiguriert ist, ein Antriebssystem des Schiffs zu steuern, um das Schiff relativ zu der Leistungsstation zu bewegen;
(ii) Definieren, relativ zu der Leistungsstation und basierend auf dem zumindest einen charakteristischen Parameter des Ladekabels, einer ersten Zielzone (116), die dazu ausgelegt ist, Schiffsbewegung (Reaktion) eines ersten Typs zu bewirken, und zumindest einer zweiten Zielzone (118), welche die erste Zielzone enthält, die dazu ausgelegt ist, Schiffsbewegung von zumindest einem zweiten Typ zu bewirken;
(iii) Überwachen eines beliebigen von dem zumindest einen charakteristischen Parameter des Ladekabels, zumindest einem Leistungsparameter des Antriebssystems, einer Schiffsposition und/oder einem Schiffskopf relativ zu der Leistungsstation und zumindest einem Umgebungsparameter;
(iv) selektives Modifizieren der ersten Zielzone und/oder der zumindest einen zweiten Zielzone als Reaktion auf eine vorbestimmte Änderung von einem beliebigen von dem zumindest einen charakteristischen Parameter des Ladekabels, zumindest einem Leistungsparameter des Antriebssystems, der Schiffsposition relativ zu der Leistungsstation und dem zumindest einen Umgebungsparameter;
(v) Steuern des Positionierungssteuersystems und des Kabelmanagementsystems, um das Schiff jeweils gemäß der Schiffsbewegung eines ersten Typs und der Schiffsbewegung eines zweiten Typs innerhalb der ersten Zielzone zu halten oder das Schiff zurück dazu zu bewegen.

2. Verfahren nach Anspruch 1, wobei die Schiffsbewegung eines ersten Typs eine passive Schiffsbewegung ist, die durch das Kabelmanagementsystem über das Ladekabel unterstützt wird, und wobei die Schiffsbewegung eines zweiten Typs eine aktive Schiffsbewegung ist, die durch das Antriebssystem betätigt und durch das Kabelmanagementsystem über das Ladekabel unterstützt wird.

3. Verfahren nach einem der vorhergehenden Ansprüche, wobei der zumindest eine charakteristische Parameter des Ladekabels ein beliebiges von einer Kabellänge, einer Kabelspannung und einer Kabeloberleitung umfasst und wobei der zumindest eine Leistungsparameter des Antriebssystems ein beliebiges von einer Energieleistungsverbrauchsrate, einer Energieladerate, einer Energiespeicherkapazität umfasst.

4. Verfahren nach einem der vorhergehenden Ansprüche, wobei das Kabelmanagementsystem dazu ausgelegt ist, dynamische Rückmeldung an das Positionssteuersystem bereitzustellen und umgekehrt, um Aktionen des Kabelmanagementsystems mit Aktionen des Positionssteuersystems wirkzukoordinieren.

5. Verfahren nach einem der vorhergehenden Ansprüche, wobei Schritt (ii) auf zumindest einem Umgebungsparameter zusätzlich zu dem charakteristischen Parameter des Ladekabels basiert, wobei der zumindest eine Umgebungsparameter in Echtzeit gemessen und/oder aus historischen Daten bereitgestellt und/oder aus einem Vorhersagemodell bereitgestellt wird.

6. Verfahren nach einem der vorhergehenden Ansprüche, wobei die Schiffsposition und der Schiffskopf relativ zu der Leistungsstation durch ein beliebiges von einem globalen Satellitennavigationssystem (GNSS), einem akustik- oder radarbasierten Positionsreferenzsystem und einem optik- oder laserbasierten Positionsreferenzsystem bereitgestellt sind.

7. Verfahren nach einem der vorhergehenden Ansprüche, wobei Schritt (v) ferner Steuern einer Kabelführung (112) und/oder eines Kabelverbinders (114), die an der Leistungsstation und/oder an dem Schiff bereitgestellt sind, um Kabelausrichtung zwischen der Leistungsstation und dem Schiff während des Ladens zu optimieren, umfasst.

8. Verfahren nach Anspruch 7, wobei die Kabelführung und/oder der Kabelverbinder aktiv betätigbar sind.

9. Verfahren nach Anspruch 8, wobei die Kabelführung und/oder der Kabelverbinder passiv betätigbar sind.

10. Verfahren nach einem der vorhergehenden Ansprüche, wobei Schritt (ii) und/oder Schritt (iv) künstliche Intelligenz (AI) nutzt, um ein beliebiges von der ersten Zielzone und zumindest einer zweiten Zielzone basierend auf einem beliebigen von dem zumindest einen charakteristischen Parameter des Ladekabels, dem zumindest einen Leistungsparameter des Antriebssystems, der Schiffsposition relativ zu der Leistungsstation und dem zumindest einen Umgebungsparameter zu definieren und/oder selektiv zu modifizieren.

11. Verfahren nach einem der vorhergehenden Ansprüche, wobei die Leistungsstation ein beliebiges von einer Offshore- und Onshore-Station für erneuerbare Energie ist, die dazu konfiguriert ist, elektrische Energie zu erzeugen und/oder zu übertragen.

12. System zur aktiv unterstützten adaptiven dynamischen Positionierung eines Schiffs während des Offshore-Ladens von einer Leistungsstation, umfassend:
ein Kabelmanagementsystem (102), das dazu konfiguriert ist, zumindest einen charakteristischen Parameter eines Ladekabels (110) zu steuern, das zwischen der Leistungsstation (20) und dem Schiff (10) verbunden ist;
ein Positionierungssteuersystem, das dazu konfiguriert ist, ein Antriebssystem des Schiffs zu steuern;
eine Steuerung, die dazu konfiguriert ist, das Kabelmanagementsystem und das Positionierungssteuersystem zum Durchführen des Verfahrens nach einem der Ansprüche 1 bis 11 wirkzusteuern.

13. System nach Anspruch 12, wobei das Kabelmanagementsystem ein adaptives Oberleitungs- und Spannungssteuersystem umfasst, das dazu konfiguriert ist, den zumindest einen charakteristischen Parameter des Ladekabels zu überwachen und zu steuern, und wobei der charakteristische Parameter ein beliebiges von einer Kabellänge, einer Kabelspannung und einer Kabeloberleitung umfasst, und wobei das adaptive Oberleitungs- und Spannungssteuersystem eine motorangetriebene Aufrolltrommel (104) umfasst.

14. System nach einem der Ansprüche 12 bis 13, ferner umfassend zumindest einen Kabelverbinder (114), der dazu ausgelegt ist, sich mit einem Endabschnitt des Ladekabels wirkzuverbinden, und wobei der zumindest eine Kabelverbinder dazu ausgelegt ist, sich aktiv und/oder passiv in Übereinstimmung mit der Ausrichtung des Ladekabels während Verwendung zu drehen.

15. System nach einem der Ansprüche 12 bis 14, wobei das Kabelmanagementsystem ferner zumindest eine Kabelführung (112) umfasst, die dazu ausgelegt ist, eine vorbestimmte Drehbewegung des Ladekabels während Verwendung bereitzustellen, und wobei die Kabelführung aktiv und/oder passiv steuerbar ist.

## Revendications

1. Procédé de positionnement dynamique adaptatif d'un navire (10) pendant une charge offshore à partir d'une station d'alimentation (20), activement assisté par un système de gestion de câble (102), le procédé comprenant les étapes de :
(i) établissement d'une liaison de commande entre ledit système de gestion de câble, conçu pour commander au moins un paramètre caractéristique d'un câble de charge (110) raccordé entre la station d'alimentation et le navire, et un système de commande de positionnement, conçu pour commander un système de propulsion du navire de façon à déplacer le navire par rapport à la station d'alimentation ;
(ii) définition, par rapport à la station d'alimentation et sur la base dudit au moins un paramètre caractéristique dudit câble de charge, d'une première zone cible (116), adaptée pour réaliser un mouvement (réponse) de navire d'un premier type, et d'au moins une seconde zone cible (118) contenant ladite première zone cible, adaptée pour réaliser un mouvement de navire d'au moins un second type ;
(iii) surveillance de l'un quelconque dudit au moins un paramètre caractéristique dudit câble de charge, d'au moins un paramètre de performance dudit système de propulsion, d'une position de navire et/ou d'un cap de navire par rapport à la station d'alimentation, et d'au moins un paramètre environnemental ;
(iv) modification sélective de ladite première zone cible et/ou de ladite au moins une seconde zone cible en réponse à un changement prédéterminé de l'un quelconque dudit au moins un paramètre caractéristique dudit câble de charge, d'au moins un paramètre de performance dudit système de propulsion, de ladite position du navire par rapport à la station d'alimentation, et dudit au moins un paramètre environnemental ;
(v) commande dudit système de commande de positionnement et dudit système de gestion de câble, de façon à maintenir le navire au sein de ladite première zone cible ou à déplacer le navire vers celle-ci conformément audit mouvement de navire d'un premier type et audit mouvement de navire d'un second type, respectivement.

2. Procédé selon la revendication 1, dans lequel ledit mouvement de navire d'un premier type est un mouvement de navire passif assisté par ledit système de gestion de câble par l'intermédiaire dudit câble de charge, et, dans lequel ledit mouvement de navire d'un second type est un mouvement de navire actif actionné par ledit système de propulsion et assisté par ledit système de gestion de câble par l'intermédiaire dudit câble de charge.

3. Procédé selon l'une quelconque des revendications précédentes, dans lequel ledit au moins un paramètre caractéristique dudit câble de charge comprend l'une quelconque d'une longueur de câble, d'une tension de câble et d'une caténaire de câble, et, dans lequel ledit au moins un paramètre de performance dudit système de propulsion comprend l'un quelconque d'un taux de consommation d'alimentation en énergie, d'un taux de charge d'énergie, d'une capacité de stockage d'énergie.

4. Procédé selon l'une quelconque des revendications précédentes, dans lequel ledit système de gestion de câble est adapté pour fournir une rétroaction dynamique audit système de commande de position et vice versa, de façon à coordonner fonctionnellement des actions dudit système de gestion de câble avec des actions dudit système de commande de position.

5. Procédé selon l'une quelconque des revendications précédentes, dans lequel l'étape (ii) est sur la base d'au moins un paramètre environnemental en plus dudit paramètre caractéristique dudit câble de charge, ledit au moins un paramètre environnemental étant mesuré en temps réel et/ou fourni à partir de données historiques, et/ou fourni à partir d'un modèle prédictif.

6. Procédé selon l'une quelconque des revendications précédentes, dans lequel ladite position de navire et ledit cap de navire par rapport à ladite station d'alimentation sont fournis par l'un quelconque d'un système mondial de navigation par satellite (GNSS), d'un système de référence de position sur la base d'acoustique ou de radar et d'un système de référence de position sur la base d'optique ou de laser.

7. Procédé selon l'une quelconque des revendications précédentes, dans lequel l'étape (v) comprend en outre la commande d'un guide de câble (112) et/ou d'un raccord de câble (114) prévus au niveau de la station d'alimentation et/ou au niveau du navire de façon à optimiser un alignement de câble entre la station d'alimentation et le navire, pendant la charge.

8. Procédé selon la revendication 7, dans lequel ledit guide de câble et/ou ledit raccord de câble peuvent être actionnés activement.

9. Procédé selon la revendication 8, dans lequel ledit guide de câble et/ou ledit raccord de câble peuvent être actionnés passivement.

10. Procédé selon l'une quelconque des revendications précédentes, dans lequel l'étape (ii) et/ou l'étape (iv) utilisent l'intelligence artificielle (AI) pour définir et/ou modifier sélectivement l'une quelconque de ladite première zone cible et d'au moins une seconde zone cible sur la base de l'un quelconque dudit au moins un paramètre caractéristique dudit câble de charge, dudit au moins un paramètre de performance dudit système de propulsion, de ladite position du navire par rapport à la station d'alimentation, et dudit au moins un paramètre environnemental.

11. Procédé selon l'une quelconque des revendications précédentes, dans lequel la station d'alimentation est l'une quelconque d'une station d'énergie renouvelable offshore et onshore, conçue pour générer et/ou transférer de l'énergie électrique.

12. Système de positionnement dynamique adaptatif activement assisté d'un navire pendant une charge offshore à partir d'une station d'alimentation, comprenant :
un système de gestion de câble (102), conçu pour commander au moins un paramètre caractéristique d'un câble de charge (110) raccordé entre la station d'alimentation (20) et le navire (10) ;
un système de commande de positionnement, conçu pour commander un système de propulsion du navire ;
un dispositif de commande, conçu pour commander fonctionnellement ledit système de gestion de câble et ledit système de commande de positionnement pour effectuer le procédé selon l'une quelconque des revendications 1 à 11.

13. Système selon la revendication 12, dans lequel ledit système de gestion de câble comprend une caténaire adaptative et un système de commande de tension conçus pour surveiller et commander ledit au moins un paramètre caractéristique dudit câble de charge, et, dans lequel ledit paramètre caractéristique comprend l'une quelconque d'une longueur de câble, d'une tension de câble et d'une caténaire de câble, et, dans lequel ladite caténaire adaptative et ledit système de commande de tension comprennent un tambour d'enroulement entraîné par moteur (104).

14. Système selon l'une quelconque des revendications 12 à 13, comprenant en outre au moins un raccord de câble (114), adapté pour se raccorder fonctionnellement à une partie d'extrémité dudit câble de charge, et, dans lequel ledit au moins un raccord de câble est adapté pour tourner activement et/ou passivement en ligne avec l'orientation dudit câble de charge, lors de l'utilisation.

15. Système selon l'une quelconque des revendications 12 à 14, dans lequel ledit système de gestion de câble comprend en outre au moins un guide de câble (112) adapté pour fournir un mouvement de rotation prédéterminé dudit câble de charge, lors de l'utilisation, et, dans lequel ledit guide de câble peut être commandé activement et/ou passivement.
